# EUROPÄISCHE PATENTSCHRIFT

(11) **EP 3 077 135 B1**
(45) Veröffentlichungstag und Bekanntmachung des Hinweises auf die Patenterteilung: **11.01.2023**
(21) Anmeldenummer: 14796511.5
(22) Anmeldetag: 12.11.2014
(51) Int. Cl.: B21F 5/00, B24B 23/04, B24B 47/14, B24B 47/16, B24B 47/12, F15B 15/12, B23D 47/12, B23Q 5/027, B26D 5/12

(54) **OSZILLIEREND ANTREIBBARE WERKZEUGMASCHINE**
OSCILLATORILY DRIVEN MACHINE TOOL
MACHINE-OUTIL POUVANT ÊTRE ENTRAÎNÉE EN OSCILLATION

(30) Priorität: 13.11.2013 DE 102013112455; 19.02.2014 DE 102014102131
(43) Veröffentlichungstag der Anmeldung: 12.10.2016
(73) Patentinhaber: C. & E. Fein GmbH, 73529 Schwäbisch-Gmünd-Bargau (DE)
(72) Erfinder: NOACK, Steffen, 09633 Halsbrücke (DE); VOIGT, Tobias, 09126 Chemnitz (DE)
(74) Vertreter: Wallinger, Michael
(86) Internationale Anmeldenummer: PCT/EP2014/074366
(87) Internationale Veröffentlichungsnummer: WO 2015/071304

(56) Entgegenhaltungen:
- EP-A1- 0 248 986
- EP-A2- 2 283 979
- WO-A1-02/03779
- DE-U1-202008 013 877
- DE-U1-202012 101 137
- GB-A- 567 549

## Beschreibung

Die Erfindung betrifft eine oszillierend antreibbare Werkzeugmaschine mit einem Antriebsmotor und mit einer um ihre Längsachse schwenkbar gelagerten Werkzeugspindel, die drehoszillierend um ihre Längsachse antreibbar ist.

Derartige oszillierend antreibbare Werkzeugmaschinen sind in vielfältiger Ausführung bekannt. Sie werden über ein mechanisches Oszillationsgetriebe angetrieben, das die rotierende Antriebsbewegung eines Antriebsmotors in eine drehoszillierende Antriebsbewegung der Werkzeugspindel um ihre Längsachse umsetzt.

Gemäß der EP 1 428 625 A1 ist hierzu ein Exzenter vorgesehen, der mit einer Exzentergabel zum oszillierenden Antrieb der Werkzeugspindel zusammenwirkt. Der Exzenter wird von einer Exzenterwelle rotierend angetrieben, die parallel zur Werkzeugspindel angeordnet ist.

Gemäß der EP 2 283 979 A1 weist eine oszillierend antreibbare Werkzeugmaschine einen Antriebsmotor mit einer Motorwelle auf, sowie eine Werkzeugspindel, die um ihre Längsachse drehoszillierend antreibbar ist, wobei ein durch die Motorwelle rotatorisch antreibbares Koppelglied mit einer geschlossenen Führungsfläche vorgesehen ist, die eine Führungsachse umläuft, wobei die Führungsfläche über Übertragungsmittel mit mindestens einem Mitnehmer zu dessen Antrieb gekoppelt ist, wobei der mindestens eine Mitnehmer relativ zur Arbeitsspindel beweglich gehalten ist und in einem Umfangsbereich der Arbeitsspindel angreift, um diese drehoszillierend anzutreiben.

Derartige mechanische Oszillationsgetriebe gibt es in zahlreichen Ausführungen, um die rotierende Antriebsbewegung einer Motorwelle in die drehoszillierende Bewegung der Werkzeugspindel umzusetzen.

Aus der EP 2 283 979 A2 ist zum Beispiel eine mechanische Kopplung des Antriebsmotors und der Spindel bekannt, bei der über ein Gestänge die Spindel oszillierend angetrieben wird.

Wegen der ständig zunehmenden Anforderungen an die Leistungsfähigkeit der Oszillationswerkzeuge werden hierbei an die mechanischen Oszillationsgetriebe hohe Anforderungen gestellt. Sie sind infolge der oszillierenden Belastung einer hohen mechanischen Beanspruchung und damit tendenziell einem Verschleiß im Langzeitbetrieb ausgesetzt. Bei hoher Belastung nimmt außerdem die Geräuschentwicklung zu. Schließlich führen Oszillationsgetriebe je nach Belastung zu mehr oder minder großen Vibrationen, was teilweise vom Benutzer als nachteilig empfunden wird. Aus der GB 567 549 A ist eine Maschine zur Herstellung konvexer Oberflächen bekannt, bei der ein von einem Hydraulikgenerator mit einem oszillierenden Fluidstrom angetriebener Drehflügelmotor vorgesehen ist, mittels dessen eine Fräskopf oszillierend mit einer Vorzugsrichtung angetrieben wird. Der Drehflügelmotor treibt den Fräskopf hin und her oszillierend an. Dabei wird die hin und her oszillierende Antriebsbewegung mittels eines Ratschenmechanismus in eine intermittierend in eine Vorzugsrichtung oszillierende Antriebsbewegung des Fräskopfes umgesetzt. Die bekannte Werkzeugmaschine ist speziell für den Einsatz mit einem Fräskopf ausgebildet, nicht jedoch zur Erzeugung einer drehoszillierenden Antriebsbewegung einer Werkzeugspindel, wie sie bei oszillierend angetriebenen Werkzeugmaschinen gewünscht ist.

Aus der EP 0 248 986 A1 ist ferner ein Drehflügelmotor bekannt, der symmetrisch angeordnete Drehflügel aufweist, die Drehkolbenfinger ausgebildet sind.

Ein weiterer Drehflügelmotor ist aus der DE 20 2012 101 137 U1 bekannt, bei der der Drehflügelmotor ein hohlzylindrisches Drehstellglied-Außenteil oszillierend antreibt, um mit einem sich daran radial erstreckenden Außenteil-Fortsatz ein weiteres Bauteil, beispielsweise ein Ruder eines Seefahrzeuges oder eine Schubstange anzutreiben.

Vor diesem Hintergrund liegt der Erfindung die Aufgabe zugrunde, eine oszillierend antreibbare Werkzeugmaschine gemäß der eingangs genannten Art derart zu verbessern, dass ein drehoszillierender Antrieb der Werkzeugspindel auch bei hoher mechanischer Belastung auf möglichst einfache und zuverlässige Weise ermöglicht ist und insbesondere Vibrationen verhindert werden.

Diese Aufgabe wird durch eine oszillierend antreibbare Werkzeugmaschine gemäß Anspruch 1 gelöst.

Die Aufgabe der Erfindung wird auf diese Weise gelöst.

Indem eine Hydraulikeinrichtung zum drehoszillierenden Antrieb der Werkzeugspindel verwendet wird, werden höhere Antriebsleistungen als bei mechanischen Oszillationsgetrieben ermöglicht, wobei teilweise gleichzeitig der Verschleiß reduziert werden kann und die Laufruhe verbessert werden kann. Der Drehflügelmotor ermöglicht eine direkte Umsetzung der pulsierenden Fluidenergie in eine Oszillationsbewegung der Werkzeugspindel, ohne dass hierzu ein mechanisches Getriebe erforderlich ist. Bei der erfindungsgemäßen Werkzeugmaschine wird die Werkzeugspindel mit einer Frequenz von 5000 bis 30000 Oszillationen pro Minute und mit einem Verschwenkwinkel von ± 1 ° bis ± 5' (von Umkehrpunkt zu Umkehrpunkt) drehoszillierend angetrieben.

Ein besonderer Vorteil der obigen Anordnung besteht darin, dass durch die jeweilige Dimensionierung der Hydraulikeinrichtung die wesentlichen Parameter des oszillierenden Antriebes angepasst werden können, also insbesondere der Schwingwinkel, die Winkelgeschwindigkeit, die Winkelbeschleunigung und das erzeugte Drehmoment. Insbesondere lassen sich hohe Drehmomente relativ verschleißarm und vibrationsarm erzielen. In bevorzugter Weiterbildung der Erfindung weist der Drehflügelmotor symmetrisch angeordnete Drehflügel auf, die in definierten Winkelabständen zueinander angeordnet sind.

Auf diese Weise werden einseitige Lagerbelastungen (in Querrichtung) vermieden. Es ergibt sich insgesamt eine gleichmäßige Lagerbelastung und damit ein verringerter Verschleiß.

Gemäß einer weiteren Ausführung der Erfindung sind die Drehflügel als Drehkolbenfinger an der Werkzeugspindel ausgebildet.

Auf diese Weise ergibt sich ein besonders einfacher Aufbau.

Gemäß einer weiteren Ausgestaltung der Erfindung läuft die Werkzeugspindel in einer entsprechend als Gegenstück geformten Buchse.

Hierdurch lässt sich eine spielarme Verbindung gewährleisten.

Vorzugsweise sind beidseits eines jeden Drehkolbenfingers mit der Buchse Fluidräume gebildet, die mit entgegengesetzt druckpulsierenden Anschlüssen des Hydraulikgenerators gekoppelt sind.

Durch diese Maßnahmen ergibt sich ein einfacher Aufbau und eine einfache Abdichtung der Fluidräume.

Gemäß einer weiteren Ausgestaltung der Erfindung besteht die Buchse aus einer Bronzelegierung, und die Werkzeugspindel besteht vorzugsweise aus Stahl.

Durch eine derartige Werkstoffpaarung ergibt sich eine Minimierung der Gleitreibung, ein verringerter Verschleiß und damit eine dauerhaft niedrige innere Leckage an den Drehkolbenfingern.

Gemäß einer weiteren Ausgestaltung weist der Drehflügelmotor vier Drehkolbenfinger aufweist, die winkelmäßig um jeweils 90° zueinander versetzt angeordnet sind.

Hierdurch ergibt sich ein guter Kompromiss zwischen einem geringen Bauraum und einem niedrigen Leerlaufdruck des Hydrauliksystems.

Gemäß einer weiteren Ausgestaltung der Erfindung ist der Hydraulikgenerator als Verdrängerpumpe mit einem Linearkolben ausgebildet ist, der von einer Motorwelle des Antriebsmotors über einen Exzenter angetrieben wird.

Hierdurch ergibt sich ein besonders einfacher und zuverlässiger Aufbau des Hydraulikgenerators.

Gemäß einer weiteren Ausgestaltung der Erfindung sind an den beiden Enden des Linearkolbens Druckräume gebildet sind, in denen die entgegengesetzt pulsierende Fluidenergie erzeugt wird.

Hierbei ist vorzugsweise jeder der beiden Druckräume über einen Verteiler mit zugeordneten Bohrungen an der Buchse gekoppelt ist, um die Fluidräume beidseits der Drehkolbenfinger mit entgegengesetzt pulsierendem Fluid zu versorgen.

Es ergibt sich so ein einfacher und zuverlässiger Aufbau.

Gemäß einer weiteren Ausgestaltung der Erfindung ist ein mit Druck beaufschlagtes Hydraulikfluidreservoir vorgesehen, das über Rückschlagventile mit dem Hydraulikgenerator gekoppelt ist.

Hierbei kann das Hydraulikfluidreservoir etwa als eine Kammer eines Zylinders ausgeführt sein. Die entsprechende Druckbeaufschlagung erfolgt durch eine Feder, die auf den Kolben wirkt, der im Zylinder verschiebbar ist.

Auf diese Weise ist ein Ausgleich von Leckageverlusten gewährleistet.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: einen Teilschnitt einer erfindungsgemäßen oszillierend antreibbaren Werkzeugmaschine;
- Fig. 2: eine Prinzipdarstellung eines erfindungsgemäßen Drehflügelmotors, der gemäß Fig. 1 zur direkten Umsetzung von oszillierender Fluidenergie in eine oszillierende Antriebsbewegung der Werkzeugspindel verwendet wird;
- Fig. 3: einen Längsschnitt durch den Vielkammer-Drehkolben gemäß Fig.2;
- Fig. 4: eine perspektivische Ansicht des Vielkammer-Drehkolbens gemäß Fig.3;
- Fig. 5: einen vereinfachten Schnitt durch den Hydraulikgenerator gemäß Fig. 1 und
- Fig. 6: eine Prinzipdarstellung des hydraulischen Gesamtsystems der Werkzeugmaschine gemäß Fig. 1.

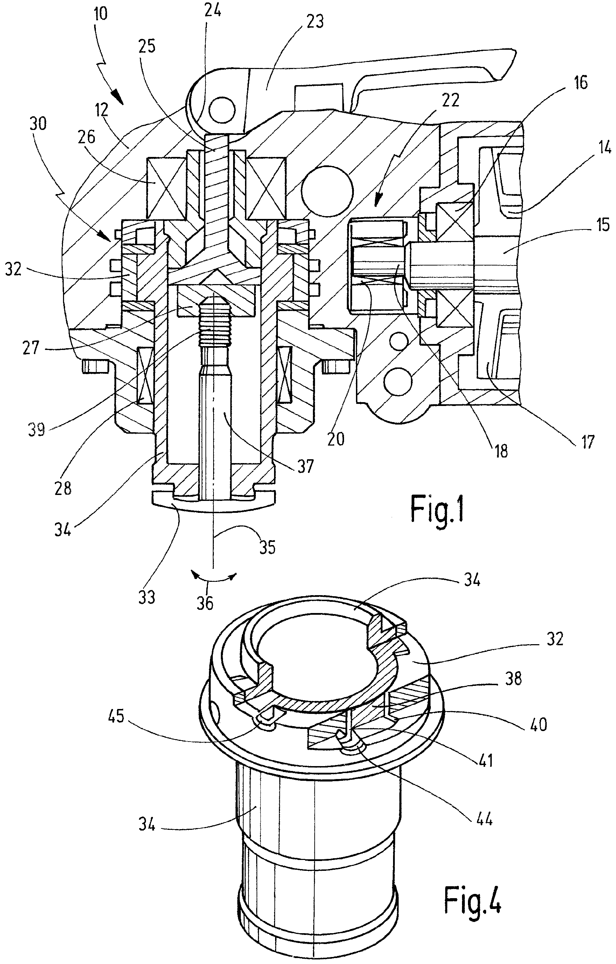

In Fig. 1 ist eine erfindungsgemäße oszillierend antreibbaren Werkzeugmaschine dargestellt und insgesamt mit der Ziffer 10 bezeichnet.

Die Werkzeugmaschine 10 weist eine Werkzeugspindel 34 auf, die im Gehäuse mittels zweier Wälzlager 26, 28 um ihre Längsachse 35 verschwenkbar gelagert ist.

Die Werkzeugspindel 34 ist als Hohlspindel ausgebildet, mit einem darin aufgenommenen, gegen die Kraft einer Feder (nicht dargestellt) verspannten Stößel 25, an dem ein Halteelement 27 festgelegt ist. Der Stößel 25 kann mittels eines Spannhebels 23 über einen auf den Stößel 25 wirkenden Exzenter 24 axial gegen die Vorspannung der Feder verschoben werden, wozu der Spannhebel 23 aus der in Fig. 1 dargestellten Spannstellung nach vorn in eine Lösestellung verschwenkt wird. Dadurch wird ein im Halteelement 27 aufgenommenes Spannelement 37, das mit einer Verzahnung 39 in das Halteelement 7 eingreift, entlastet, so dass das Spannelement 37 abgenommen werden kann, um etwa ein zwischen der äußeren Stirnfläche der Werkzeugspindel 34 und einem Kopf 33 des Spannelementes 37 gehaltenes Werkzeug abzunehmen.

Zum Spannen wird das Spannelement 37 wieder durch eine zugeordnete Ausnehmung des Werkzeugs hindurch in die Werkzeugspindel 34 gesteckt, bis die Verzahnung 39 in das Halteelement 37 eingreift, und der Spannhebel 23 wieder in seine Spannstellung gemäß Fig. 1 bewegt.

Die Werkzeugspindel 34 ist um ihre Längsachse 35 mit hoher Frequenz und im Bereich von etwa 5.000 bis 30.000 Oszillationen pro Minute und geringem Verschwenkwinkel im Bereich von etwa ± 1° bis ± 5° (von Umkehrpunkt zu Umkehrpunkt) antreibbar. Vorzugsweise entspricht die Frequenz der Drehzahl des verwendeten Antriebsmotors 14 und beträgt bei 20.000 Umdrehungen pro Minute etwa 333 Hz. Der Schwenkwinkel von Umkehrpunkt zu Umkehrpunkt liegt vorzugsweise bei ± 2,5°.

Zur Übertragung einer hohen Leistung auf die Werkzeugspindel 34 wird entgegen einer im Stand der Technik bekannten mechanischen Kopplung mittels eines Oszillationsgetriebes nunmehr ein hydraulisches Getriebe verwendet.

Hierzu wird vom Motor 14 ein Hydraulikgenerator angetrieben, der in Fig. 1 lediglich mit der Ziffer 22 angedeutet ist. Vom Hydraulikgenerator 22 wird die oszillierende Fluidenergie über einen Hydraulikmotor 30, der mit der Werkzeugspindel 34 gekoppelt ist, in eine drehoszillierende Antriebsbewegung der Werkzeugspindel 34 um ihre Längsachse 35 umgesetzt.

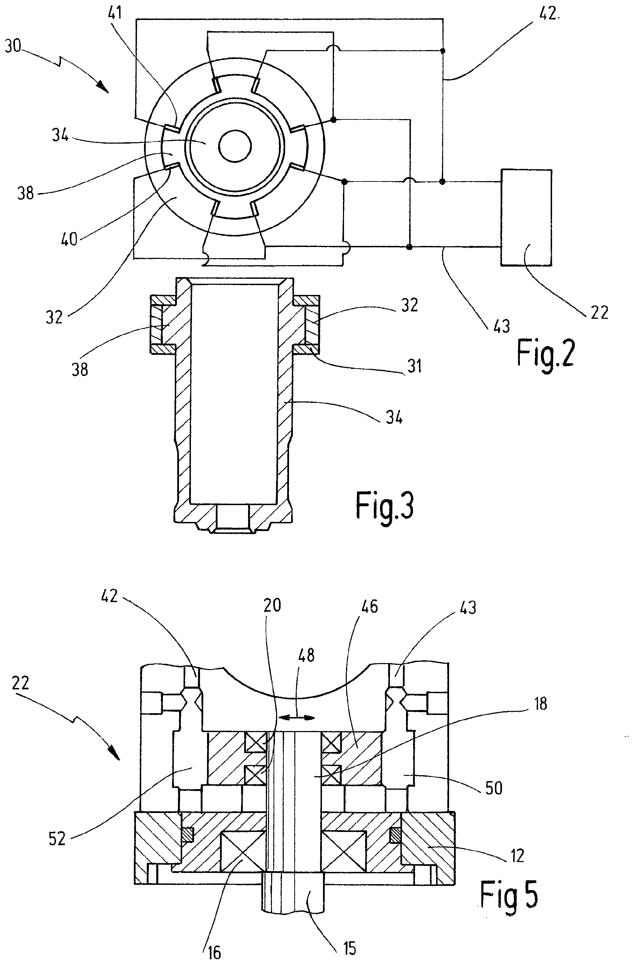

In Fig. 2 ist der Hydraulikmotor 30 gemäß Fig. 1 schematisch dargestellt. Es handelt sich um einen symmetrisch ausgestalteten Drehflügel-Schwenkflügelmotor (kurz Drehfiügelmotor) 30, der vier um jeweils 90° zueinander winkelversetzt angeordnete Drehflügel 38 aufweist, die an der Werkzeugspindel 34 außen angeformt sind. Jedem Drehkolbenfinger 38 sind zwei angrenzende Fluidkammern 40, 41 zugeordnet, die zwischen der Werkzeugspindel 34 und der umgebenden Buchse 32 gebildet sind, in der die Werkzeugspindel 34 in diesem Bereich läuft.

Es sind somit beidseits jedes Drehkolbenfingers 38 angrenzende Fluidräume 40, 41 gebildet. Insgesamt sind also um den Umfang der Werkzeugspindel 34 in definierten Winkelabständen verteilt acht Fluidräume 40, 41 gebildet. Davon sind die Fluidräume 40 auf der einen Drehseite über einen zugeordneten Verteiler 43 miteinander gekoppelt und an den Hydraulikgenerator 22 angeschlossen. Die anderen Fluidräume 41 auf der anderen Drehseite sind über einen zugeordneten Verteiler 42 miteinander gekoppelt und an einen anderen Ausgang des Hydraulikgenerators 22 angeschlossen. Mittels des Hydraulikgenerators 22 wird ein pulsierender Fluiddruck erzeugt, wobei der Druck alternierend zwischen den beiden Ausgängen, die an die Verteiler 42 bzw. 43 angeschlossen sind, pulsiert. Es ergibt sich also abwechselnd ein Überdruck in den Fluidräumen 40 und in den Fluidräumen 41. Auf diese Weise wird pulsierende Hydraulikenergie unmittelbar in eine oszillierende Drehbewegung der Werkzeugspindel 34 umgesetzt.

Der hierzu verwendete Hydraulikgenerator 22 ist aus Fig. 5 näher zu ersehen.

Die Motorwelle 15 des Antriebsmotors 14 ist an ihrem Ende, an dem der Lüfter 17 aufgenommen ist, mittels eines Wälzlagers 16 am Gehäuse 12 gelagert. Am Ende der Motorwelle 15 ist ein Exzenter 18 gehalten, auf dem ein Exzenterlager 20 vorgesehen ist. Das Exzenterlager 20 greift in einen Linearkolben 46 ein, so dass dieser bei Rotation der Motorwelle 15 gemäß dem Doppelpfeil 48 in Längsrichtung oszillierend hin und her bewegt wird. Der Linearkolben 46 wirkt an seinen beiden Enden jeweils mit einem Fluidraum 50 bzw. 52 zusammen, so dass in den Fluidräumen 50 bzw. 52 befindliche Hydraulikflüssigkeit durch die Bewegung des Linearkolbens 46 abwechselnd im einen Druckraum 50 und im anderen Druckraum 52 komprimiert wird.

Die so erzeugte pulsierende Hydraulikenergie wird unmittelbar über die Verteiler 42, 43 in die zugeordneten Fluidräume 40 bzw. 41 des Hydraulikmotors 30 eingekoppelt, so dass sich die drehoszillierende Antriebsbewegung der Werkzeugspindel 34 ergibt.

Der Linearkolben 46 ist gemäß Fig. 5 mittig mit dem Exzenterlager 20 verbunden, damit eine unsymmetrische Lagerbelastung vermieden wird. Hierzu ist das Exzenterlager 20 als geteiltes Lager mit zwei Einzellagern ausgebildet, die symmetrisch am Linearkolben 46 angreifen.

Aus Fig. 4 ist naher zu ersehen, wie die zwischen der Werkzeugspindel 34 und der Buchse 32 gebildeten Fluidräume 40, 41 über Bohrungen 44, 45 in der Buchse 32 von außen mit den beiden Hydraulikleitungen gekoppelt werden können. Die Hydraulikleitungen (nicht dargestellt) können mit den Bohrungen 44, 45 verschraubt werden, In einer bevorzugten Ausführung sind die Hydraulikleitungen im oberen Gehäuse 12 eingearbeitet und kontaktieren direkt die jeweils zugehörigen Bohrungen 44 bzw. 45.

Während die Werkzeugspindel 34 bevorzugt aus Stahl besteht, besteht die Buchse 32 bevorzugt aus einer Bronzelegierung.

Auf diese Weise ergibt sich eine besonders geringe Gleitreibung und damit eine Verschleißminimierung,

Aus Fig. 3 ist zu ersehen, dass an der Werkzeugspindel 34 beidseitig der Buchse 32 jeweils eine scheibenförmiger Dichtungsring 31 angeordnet ist.

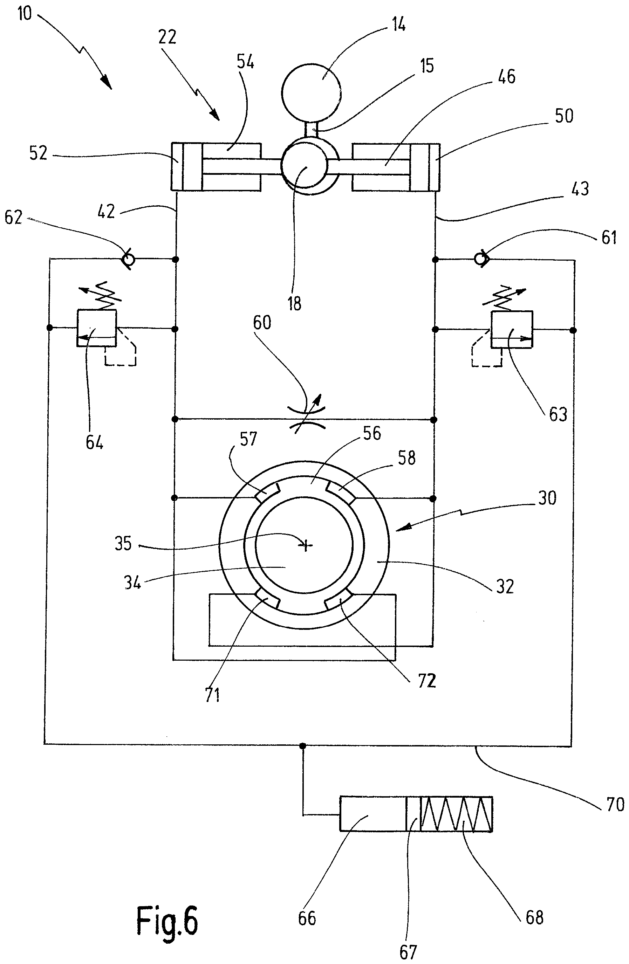

Das Hydraulikschema der Werkzeugmaschine 10 gemäß Fig. 1 ist schematisch in Fig. 6 dargestellt.

In der oberen Hälfte von Fig. 6 ist der Hydraulikgenerator 22 dargestellt, der vom Antriebsmotor 14 über die Motorwelle 15 und den davon angetriebenen Exzenter 18 angetrieben wird. Der Exzenter 18 bewegt den Linearkolben 46 innerhalb eines Fluidzylinders 54. In den Druckräumen 50, 52 an den beiden Enden des Linearkolbens 46 ergeben sich somit jeweils Druckpulsationen mit entgegengesetztem Vorzeichen. Die beiden Druckräume 50, 52 des Hydraulikgenerators 22 stehen über Fluidleitungen 42, 43 mit dem Drehflügelmotor 30 in Verbindung. Der Drehflügelmotor 30 weist in der hier gezeigten Ausführungsform zwei einander gegenüber liegende Drehkolbenfinger 56 auf, die unmittelbar an der Werkzeugspindel 34 ausgebildet sind. Das Gegenstück zu den Drehkolbenfingern 56 an der Werkzeugspindel 34 wird durch eine entsprechend geformte Buchse 32 gebildet, die vorzugsweise aus Bronze besteht.

Beidseits eines jeden Drehkolbenfingers 56 ist zwischen der Werkzeugspindel 34 und der Buchse 32 jeweils ein Fluidraum 57, 58 bzw. 71, 72 gebildet. Einander gegenüberliegende, im gleichen Drehsinn wirkende Fluidräume 57, 72 bzw. 58, 71 sind jeweils gemeinsam mit der zugehörigen Fluidleitung 42 bzw. 43 gekoppelt.

Auf diese Weise ergeben die abwechselnden Druckpulsationen in den Leitungen 42, 43 eine Drehschwenkbewegung der Werkzeugspindel 34 um ihre Längsachse 35. In Fig. 6 sind beispielhaft nur zwei Drehkolbenfinger 56 angedeutet, die einander gegenüberliegend angeordnet sind. Es versteht sich, dass vorzugsweise eine größere Anzahl von Drehkolbenfingern verwendet werden kann, so dass es sich um einen Vielkammer-Drehflügelmotor handelt, wie zuvor anhand von Fig. 2 erläutert wurde.

Um einen Überdruck zu vermeiden, können beide Fluidleitungen 42, 43 mit einem Überdruckventil 64 bzw. 63 in Verbindung stehen. Die Überdruckventile 63, 64 sind rein optional. Wird darauf verzichtet, so kann dem durch eine ausreichende Dimensionierung Rechnung getragen werden. Im Grenzfall wird der Antriebsmotor 14 langsamer und verhindert so einen weiteren Druckanstieg. Durch einen Verzicht auf die Überdruckventile 63, 64 wird einem Driften der Werkzeugspindel 34 aus der Mittellage entgegen gewirkt.

Ferner ist an beide Leitungen 42, 43 über zugeordnete Rückschlagventile 62 bzw. 61 ein unter Druck stehendes Fluidreservoir 66, 67 über eine gemeinsame Leitung 70 angeschlossen.

Die im Praxisbetrieb unvermeidlichen Fluidverluste können auf diese Weise ausgeglichen werden. Eine geeignete Menge von Hydraulikfluid ist hierzu in einem Fluidzylinder 66 aufgenommen. Dieser ist über einen Kolben 67 mit dem Druck einer geeignet dimensionierten Feder 68 beaufschlagt.

Somit wird in der Leitung 70 ein bestimmter Fluiddruck eingestellt, der beispielsweise im Bereich von 2,9 bis 5,2 bar liegen kann. Fällt der Druck in einer der beiden Leitungen 42, 43 unter diesen Wert ab, so wird Hydraulikfluid aus dem Fluidzylinder 66 nachgefördert. Die Rückschlagventile weisen hierzu bevorzugt einen Öffnungsdruck von 0,2 bar auf.

Zwischen den beiden Leitungen 42, 43, die an die Druckräume 50, 52 des Fluidzylinders 54 angeschlossen sind, ist ferner eine Bypass-Drossel 60 angeordnet

Mittels der Bypass-Drossel 60 kann die Amplitude der Oszillationsbewegung der Werkzeugspindel 34 kontinuierlich verstellt werden, und die Werkzeugspindel kann bei geöffneter Bypass-Drossel 60 manuell in die Mittellage verstellt werden.

## Patentansprüche

1. Oszillierend antreibbare Werkzeugmaschine, mit einer um ihre Längsachse (35) schwenkbar gelagerten Werkzeugspindel (34), mit einem Antriebsmotor (14), wobei die Werkzeugmaschine (10) dazu ausgelegt ist, die Werkzeugspindel (34) mit einer Frequenz von 5000 bis 30000 Oszillationen pro Minute und mit einem Verschwenkwinkel von ± 1 ° bis ± 5° von Umkehrpunkt zu Umkehrpunkt drehoszillierend anzutreiben, wobei die Werkzeugmaschine **dadurch gekennzeichnet ist, dass** der Antriebsmotor (14) mit einem Hydraulikgenerator (22) zur Erzeugung eines oszillierenden Fluidstroms gekoppelt ist, der einen Hydraulikmotor in Form eines Drehflügelmotors (30) antreibt, um die Werkzeugspindel (34) um ihre Längsachse (35) oszillierend anzutreiben.

2. Werkzeugmaschine nach Anspruch 1, **dadurch gekennzeichnet, dass** der Drehflügelmotor (30) symmetrisch angeordnete Drehflügel (38) aufweist.

3. Werkzeugmaschine nach Anspruch 1 oder 2, **dadurch gekennzeichnet, dass** die Drehflügel (38) als Drehkolbenfinger an der Werkzeugspindel (34) ausgebildet sind.

4. Werkzeugmaschine nach einem der vorhergehenden Ansprüche, **dadurch gekennzeichnet, dass** die Werkzeugspindel (34) in einer als Gegenstück geformten Buchse (32) läuft.

5. Werkzeugmaschine nach Anspruch 3 und 4, **dadurch gekennzeichnet, dass** beidseits eines jeden Drehkolbenfingers (38) mit der Buchse (32) Fluidräume (40, 41) gebildet sind, die mit entgegengesetzt druckpulsierenden Anschlüssen (42, 43) des Hydraulikgenerators (22) gekoppelt sind.

6. Werkzeugmaschine nach Anspruch 4 oder 5, **dadurch gekennzeichnet, dass** die Buchse (32) aus einer Bronzelegierung besteht und die Werkzeugspindel (34) vorzugsweise aus Stahl besteht.

7. Werkzeugmaschine nach einem der vorhergehenden Ansprüche, **dadurch gekennzeichnet, dass** der Drehflügelmotor (30) vier Drehkolbenfinger (38) aufweist, die winkelmäßig um jeweils 90° zueinander versetzt angeordnet sind.

8. Werkzeugmaschine nach einem der vorhergehenden Ansprüche, **dadurch gekennzeichnet, dass** der Hydraulikgenerator (22) als Verdrängerpumpe mit einem Linearkolben (46) ausgebildet ist, der von einer Motorwelle (15) des Antriebsmotors (14) über einen Exzenter (18) angetrieben wird.

9. Werkzeugmaschine nach Anspruch 8, **dadurch gekennzeichnet, dass** an den beiden Enden des Linearkolbens (46) Druckräume (50, 52) gebildet sind, in denen die entgegengesetzt pulsierende Fluidenergie erzeugt wird.

10. Werkzeugmaschine nach Anspruch 5 und 9, **dadurch gekennzeichnet, dass** jeder der Druckräume (50, 52) über einen Verteiler (42, 43) mit zugeordneten Bohrungen (44, 45) an der Buchse (32) gekoppelt ist, um die Fluidräume (40, 41) beidseits der Drehkolbenfinger (38) mit entgegengesetzt pulsierendem Fluid zu versorgen.

11. Werkzeugmaschine nach einem der vorhergehenden Ansprüche, **dadurch gekennzeichnet, dass** ein mit Druck beaufschlagtes Hydraulikfluidreservoir (66, 67) vorgesehen ist, das über Rückschlagventile (61, 62) mit dem Hydraulikgenerator gekoppelt ist, um Leckageverluste auszugleichen.

12. Werkzeugmaschine nach Anspruch 11, **dadurch gekennzeichnet, dass** das Hydraulikfluidreservoir einen Zylinder (66) umfasst, in dem ein Kolben (67) verschiebbar ist, der mittels eines Federelementes (68) vorgespannt wird.

## Claims

1. Oscillatingly drivable machine tool, with a tool spindle (34) pivotably mounted about its longitudinal axis (35), with a drive motor (14), wherein the machine tool (10) is configured to drive the tool spindle (34) in a rotationally oscillating manner at a frequency of 5000 to 30000 oscillations per minute and with a pivoting angle of ± 1° to ± 5° from reversal point to reversal point, wherein the machine tool is **characterized in that** the drive motor (14) is coupled to a hydraulic generator (22) for generating an oscillating fluid flow, which drives a hydraulic motor in the form of a rotary vane motor (30) in order to drive the tool spindle (34) in a oscillating manner about its longitudinal axis (35).

2. Machine tool according to claim 1, **characterized in that** the rotary vane motor (30) comprises symmetrically arranged rotary wings (38).

3. Machine tool according to claim 1 or 2, **characterized in that** the rotary wings (38) are adapted as rotary piston fingers on the tool spindle (34).

4. Machine tool according to one of the preceding claims, **characterized in that** the tool spindle (34) runs in a bushing (32) shaped as a counterpart.

5. Machine tool according to claims 3 and 4, **characterized in that** fluid chambers (40, 41) are formed on both sides of each rotary piston finger (38) with the bushing (32), which are coupled to oppositely pressure-pulsating connections (42, 43) of the hydraulic generator (22).

6. Machine tool according to claim 4 or 5, **characterized in that** the bushing (32) consists of a bronze alloy and the tool spindle (34) preferably consists of steel.

7. Machine tool according to one of the preceding claims, **characterized in that** the rotary vane motor (30) comprises four rotary piston fingers (38) which are angularly offset by 90° to each other.

8. Machine tool according to one of the preceding claims, **characterized in that** the hydraulic generator (22) is adapted as a displacement pump with a linear piston (46) which is driven by a motor shaft (15) of the drive motor (14) via an eccentric (18).

9. Machine tool according to claim 8, **characterized in that** at the two ends of the linear piston (46) pressure chambers (50, 52) are formed, in which the oppositely pulsating fluid energy is generated.

10. Machine tool according to claim 5 and 9, **characterized in that** each of the pressure chambers (50, 52) is coupled to the bushing (32) via a distributor (42, 43) with associated bores (44, 45), in order to separate the fluid chambers (40, 41) on both sides of the rotary piston fingers (38) with oppositely pulsating fluid.

11. Machine tool according to one of the preceding claims, **characterized in that** a pressurized hydraulic fluid reservoir (66, 67) is provided, which is coupled to the hydraulic generator via check valves (61, 62), in order to compensate for leakage losses.

12. Machine tool according to one of the preceding claims, **characterized in that** the hydraulic fluid reservoir comprises a cylinder (66) in which a piston (67) is displacable, which is prestressed by means of a spring element (68).

## Revendications

1. Machine-outil oscillante, avec une broche porte-outil (34) montée de manière à pouvoir tourner autour de son axe longitudinal (35), avec un moteur d'entraînement (14), dans laquelle la machine-outil (10) est conçue pour entraîner en rotation-oscillation la broche porte-outil (34) avec une fréquence d'oscillation de 5000 à 30000 par minute et avec un angle de pivotement de ± 1° à ± 5° d'un point d'inversion à l'autre, dans laquelle la machine-outil est **caractérisée en ce que** le moteur d'entraînement (14) est couplé à un générateur hydraulique (22) pour générer un flux de fluide oscillant qui entraîne un moteur hydraulique sous la forme d'un moteur à palettes rotatives (30) pour entraîner en oscillation la broche porte-outil (34) autour de son axe longitudinal (35).

2. Machine-outil selon la revendication 1, **caractérisée en ce que** le moteur à palettes rotatives (30) présente des palettes rotatives (38) disposées symétriquement.

3. Machine-outil selon la revendication 1 ou 2, **caractérisée en ce que** les palettes rotatives (38) sont réalisées comme des doigts de piston rotatif sur la broche porte-outil (34).

4. Machine-outil selon l'une quelconque des revendications précédentes, **caractérisée en ce que** la broche porte-outil (34) tourne dans une douille (32) formée en tant que contre-pièce.

5. Machine-outil selon les revendications 3 et 4, **caractérisée en ce que** sont formées, des deux côtés de chaque doigt de piston rotatif (38), avec la douille (32), des chambres de fluide (40, 41) qui sont couplées à des raccords à pulsations de pression opposées (42, 43) du générateur hydraulique (22).

6. Machine-outil selon la revendication 4 ou 5, **caractérisée en ce que** la douille (32) est constituée d'un alliage de bronze et la broche porte-outil (34) est constituée de préférence d'acier.

7. Machine-outil selon l'une quelconque des revendications précédentes, **caractérisée en ce que** le moteur à palettes rotatives (30) présente quatre doigts de piston rotatif (38) qui sont disposés de manière décalée selon un angle respectivement de 90° les uns par rapport aux autres.

8. Machine-outil selon l'une quelconque des revendications précédentes, **caractérisée en ce que** le générateur hydraulique (22) est réalisé comme une pompe volumétrique avec un piston linéaire (46) qui est entraîné par l'intermédiaire d'un excentrique (18) par un arbre moteur (15) du moteur d'entraînement (14).

9. Machine-outil selon la revendication 8, **caractérisée en ce que** sont formées sur les deux extrémités du piston linéaire (46) des chambres de pression (50, 52), dans lesquelles l'énergie de fluide à pulsations opposées est produite.

10. Machine-outil selon les revendications 5 et 9, **caractérisée en ce que** chacune des chambres de pression (50, 52) est couplée par l'intermédiaire d'un distributeur (42, 43) à des alésages (44, 45) associés sur la douille (32) pour alimenter les chambres de fluide (40, 41) des deux côtés des doigts de piston rotatif (38) en fluide à pulsations opposées.

11. Machine-outil selon l'une quelconque des revendications précédentes, **caractérisée en ce qu'**est prévu un réservoir de fluide hydraulique soumis à l'action d'une pression (66, 67) qui est couplé au générateur hydraulique par l'intermédiaire de clapets anti-retour (61, 62) pour compenser des pertes par fuites.

12. Machine-outil selon la revendication 11, **caractérisée en ce que** le réservoir de fluide hydraulique comprend un cylindre (66), dans lequel peut être coulissé un piston (67), qui est précontraint au moyen d'un élément ressort (68) .
